Europäisches Patentamt

European Patent Office

Office européen des brevets

(11) Publication number: **0 437 101 A1**

## (12) EUROPEAN PATENT APPLICATION

(21) Application number: 90314312.1

(22) Date of filing: 27.12.90

(51) Int. Cl.⁵: **B60R 25/04**

(30) Priority: 08.01.90 US 462024

(43) Date of publication of application:
17.07.91 Bulletin 91/29

(84) Designated Contracting States:
DE ES FR GB IT

(71) Applicant: **Posner, Edward C.**
**1460 Rose Villa Street**
**Pasadena, California 91106(US)**

Applicant: **Sotel, Phillip K.**
**570, Garden Lane**
Pasadena, California 91105(US)

(72) Inventor: **Posner, Edward C.**
**1460 Rose Villa Street**
**Pasadena, California 91106(US)**
Inventor: **Sotel, Phillip K.**
**570, Garden Lane**
**Pasadena, California 91105(US)**

(74) Representative: **Brereton, Paul Arthur et al**
**REDDIE & GROSE 16 Theobalds Road**
**London WC1X 8PL(GB)**

(54) Automobile anti-theft apparatus.

(57) Automotive vehicle anti-theft apparatus includes a chip (12) having an optical code on an outer surface affixed to a key (10). The key upon being inserted into a receiving slot (e.g., in the automobile steering column (18) actuates a switch (20) energizing an optical reader (22) which scans the code on the key (10). The scanned code is compared with a stored code and on coincidence initiates functioning of the vehicle control computer (26) enabling starting and operation of the vehicle.

FIG. 2

# AUTOMOBILE ANTI-THEFT APPARATUS

The present invention relates generally to automobile anti-theft apparatus, and, more particularly, to such anti-theft apparatus which coacts with the automobile function control central processor to prevent unauthorized use or theft of the automobile.

It is customary at the present time for automotive vehicles to include a central processor as a part of its overall control apparatus. Typically, the central processor controls the electrical ignition and fuel injection timing as well as monitoring through appropriately located sensors the condition of various things, such as oil level, for example, and giving an appropriate signal to the driver when repair or maintenance is required.

Preventing theft or unwarranted utilization of an automobile by others is obviously desirable and although many different approaches have been taken to solve this problem, known systems are not completely satisfactory or effective to prevent theft or adverse use. One general approach has been to provide some sort of noise generator, such as a siren, which is activated upon unauthorized tampering with the auto. A problem with such apparatus is that it requires a response on the part of individuals in the vicinity which simply may not be forthcoming. Also, known alarm apparatus are relatively easily circumvented or disabled enabling the thief to continue unwarranted use of the vehicle.

Other anti-theft apparatus of a mechanical lock nature physically prevent manipulation of the steering wheel or transmission control lever unless the ignition is unlocked. This variety of apparatus is also relatively easily circumvented by a would be thief.

Still other auto theft prevention apparatus obstructs some essential engine operation function (e.g., electrical ignition) if unauthorized entry or use is attempted. Known efforts along this line have been found ineffective to totally deter a practical car thief.

It is a primary aim and object of the present invention to provide security apparatus for an automotive vehicle which disables or prevents a vehicle control computer from performing essential engine start and running functions.

Another object of the invention is to provide security apparatus as in the previous object which is released by a key having an optical chip with unique code identification thereon that is rendered by an optical disc reader.

In accordance with the present invention an ignition key for an automobile includes a chip incorporated into the key body such as by embedding within a recess, for example, which includes coded optical information unique to the particular automobile with which the key is to be used. The key upon being inserted into a receiving slot in the dashboard or steering column, for example, actuates a switch to energize an optical reader. The reader scans the chip carried by the key and produces a set of signals corresponding to the coded information. The coded signals are then fed into a synchronizing sequencer where the signals are compared with a prestored unique set of signals and if the two are identical, then an output signal is obtained for initiating the first or next instruction of the engine program for the engine computer. On the other hand, if there is a difference in the coded information read from the stored signals, then no first or input instruction signal is generated and in that way the engine computer is disabled resulting in the auto being incapable of being started or otherwise operated.

In the accompanying drawing:

FIG. 1 is a side elevational, partially sectional view of a key including a coded identification chip in accordance with the present invention;

FIG. 2 is a function block diagram of the invention incorporated within the engine control apparatus for an automobile; and

FIG. 3 is a flow chart describing a program of a routine for preventing unauthorized utilization of the automobile in accordance with the present invention.

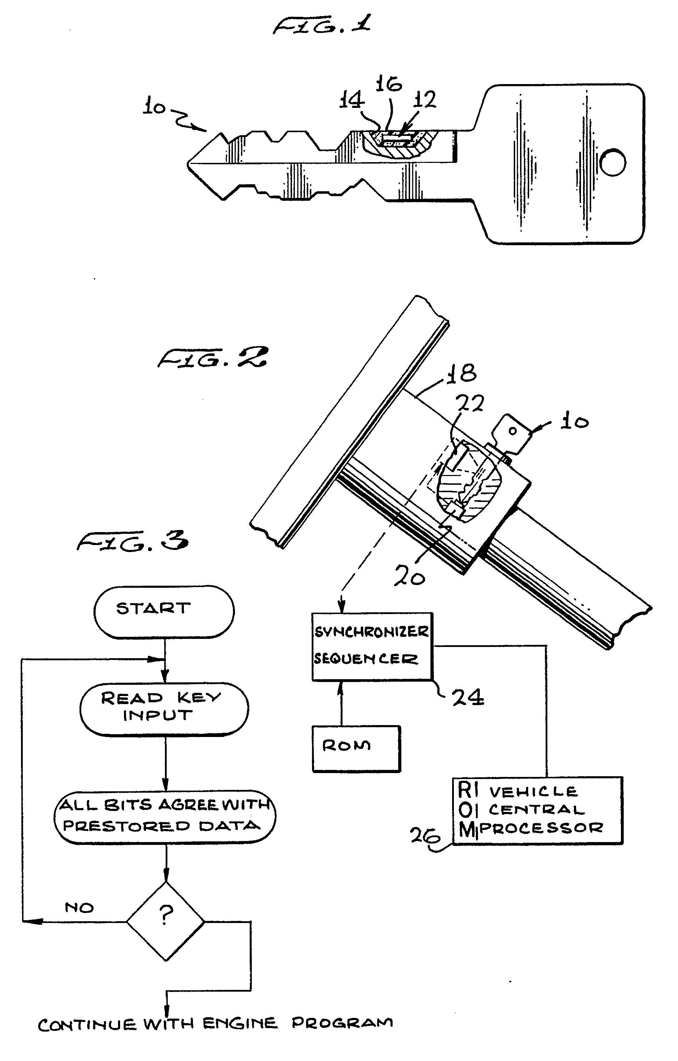

With reference now to the drawings, and particularly FIG. 1, the present invention has as its primary consideration the prevention of unauthorized use of equipment such as an automobile, for example, and a basic part of the apparatus is a specially coded key 10 which is necessary in order to obtain full access and use of the equipment. More particularly, the key includes a micro chip 12 which is embedded within a recess 14 formed in, say, the key edge. The chip also has coded information laid down thereon which can be read by an optical disc reader. The code is unique for each set of equipment (e.g., automobile) that is desired to be protected against unauthorized use. The chip is covered over with a light transparent coating 16 such as epoxy which will both enable access to the code on the chip in operation of the invention, and also protect the chip from inadvertent damage or destruction.

In use, the key 10 is inserted into a conveniently located receiving slot such as in the vehicle steering column 18 where it actuates a switch 20 for energizing an optical disc scanner 22 to scan the coded data on the key. The coded data being read produces a corresponding set of electrical digital impulses which are fed into a synchronizing sequencer 24. The sequencer is a digital comparator for aligning and comparing the signals read on the key with a prestored number (ROM) within the computer, such as, for example, 32 bits of information plus check and synchronization bits, assigned to that particular automobile, and if the two sets of data are identical this produces an output signal (START). The START signal enables the central processor 26 to initiate and maintain engine operation. In the event the two signal sets do not match, then a START is not generated and the processor will not permit the engine to start. FIG. 3 is a flow chart depicting the described functional operation.

The techniques for producing an optical code on a chip and equipment for scanning the chip to produce a corresponding set of electrical signals are known and utilized in commercially available products and equipment. For details of these techniques and apparatus reference can be made to Electronics Engineers' Handbook, Donald G. Fink and Donald Christiansen, Third Edition, published by McGraw-Hill Book Company (1989) pages 19-89 through 19-94.

Although the present invention is described in connection with a preferred embodiment, it is to be understood that those skilled in the appertaining arts may make modifications that will come within the spirit of this invention and within the ambit of the appended claims. For example, although specifically described in connection with an automotive vehicle anti-theft apparatus, the invention can provide security for any kind of vehicle or apparatus which operates under computer command.

## Claims

1. Anti-theft apparatus for an automotive vehicle having a central processor controlling engine operation, comprising:
   a key;
   a micro chip with encoded optical information thereon, said chip being affixed to the key;
   an optical reader providing digital signal output corresponding to the optically encoded information on the key scanned by the reader;
   means for receiving the key to position the micro chip within scanning range of the optical reader; and
   means for comparing the optical reader output signal with a predetermined stored signal and on coincidence thereof generating a signal for initiating operation of the central processor.

2. Anti-theft apparatus as in claim 1, in which the micro chip is positioned within a recess in a surface of the key, and a transparent protective material covers the encoded optical information on the key.

3. Anti-theft apparatus as in claim 2, in which the transparent protective material is an epoxy.

4. Anti-theft apparatus as in claim 1, in which there is further provided a switch mounted to the receiving means which interconnects the optical reader with a source of energizing electrical power when the key is positioned therewithin.

5. Anti-theft apparatus as in claim 1, in which the key receiving means is located within the automotive vehicle steering column, and slot means are provided enabling access of the key to the receiving means.

6. Anti-theft apparatus as in claim 2, in which the recess is located on an edge of the key.

7. Apparatus for preventing unauthorized operation of computer controlled equipment, comprising:
   portable means having an optical digital code on a surface thereof;
   an optical reader for scanning the portable means optical code and producing a digital electrical signal representative of the optical digital code; and
   comparator means interconnected with said optical reader for comparing the digital electrical signal with a stored predetermined signal and on coincidence providing an output to the computer for initiating equipment control operation.

8. Apparatus as in claim 7, in which the comparator is incorporated into the computer.

FIG. 1

10

14 16 12

FIG. 2

18

22

10

20

SYNCHRONIZER
SEQUENCER

24

ROM

R | VEHICLE
O | CENTRAL
M | PROCESSOR

26

FIG. 3

START

READ KEY
INPUT

ALL BITS AGREE WITH
PRESTORED DATA

NO

?

CONTINUE WITH ENGINE PROGRAM

4

European Patent Office

# EUROPEAN SEARCH REPORT

Application Number

## EP 90 31 4312

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y | US-A-4 749 873 (MUTOH ET AL.) <br> * column 15, line 23 - column 16, line 59 * * column 17, line 39 - column 19, line 28; figures 13-19 * <br> — — — | 7,1-6,8 | B 60 <br> R 25/04 |
| Y | GB-A-2 183 717 (YALE SECURITY PRODUCTS LIMITED) <br> * page 1, lines 25 - 45 * * page 1, lines 62 - 84; figure 1 @ page 1, line 122 - page 2, line 1; figure 5 * <br> — — — | 1-6 | |
| A,Y | WO-A-8 803 884 (ANDERSSON) <br> * abstract; figures 1, 2 * * page 2, line 30 - page 5, line 24 * <br> — — — — — | 1,7,8 | |

| TECHNICAL FIELDS SEARCHED (Int. Cl.5) |
|---|
| B 60 R <br> E 05 B |

The present search report has been drawn up for all claims

| Place of search | Date of completion of search | Examiner |
|---|---|---|
| The Hague | 11 April 91 | DUBOIS B.F.J. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document